(19) **Europäisches Patentamt**
**European Patent Office**
**Office européen des brevets**

(11) **EP 3 064 868 B1**

(12) **EUROPEAN PATENT SPECIFICATION**

(45) Date of publication and mention
of the grant of the patent:
**20.01.2021 Bulletin 2021/03**

(51) Int Cl.:
*F25B 41/06* (2006.01)  *F16K 47/02* (2006.01)
*F25B 13/00* (2006.01)

(21) Application number: **13896214.7**

(86) International application number:
**PCT/JP2013/079226**

(22) Date of filing: **29.10.2013**

(87) International publication number:
**WO 2015/063854 (07.05.2015 Gazette 2015/18)**

(54) **EXPANSION VALVE**

EXPANSIONSVENTIL

VANNE DE DÉTENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.09.2016 Bulletin 2016/36**

(73) Proprietor: **Mitsubishi Electric Corporation
Tokyo 100-8310 (JP)**

(72) Inventors:
• **ITO, Masahiro
Tokyo 100-8310 (JP)**

• **SHIMAZU, Yusuke
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**JP-A- H05 264 129    JP-A- H08 159 511
JP-A- H09 310 939    JP-A- H11 325 658
JP-A- 2000 346 495    JP-A- 2001 289 538
JP-A- 2003 097 866    JP-A- 2006 275 452
JP-A- 2013 104 439**

**Description**

Technical Field

The present invention relates to an expansion valve that produces reduced refrigerant passing sound to provide improved comfortability related to noise levels.

Background Art

In an expansion valve that expands high-temperature and high-pressure refrigerant to make the refrigerant into low-temperature and low-pressure refrigerant, flowing sound is generated when the refrigerant flows through a valve chamber. The refrigerant that flows into the valve chamber provided with a valve body is brought into a two-phase flow state in which gas-phase refrigerant is mixed in liquid-phase refrigerant. If large bubbles are present in the gas-phase refrigerant, collision sound is generated when the refrigerant passes through the valve chamber, causing noise. To reduce such refrigerant passing sound, various contrivances and proposals have been hitherto made.

For example, an expansion device (dehumidifying valve) has been proposed in which a valve body is formed of a porous permeable material communicating with a refrigerant flowing direction and an adjustment unit that adjusts the transmission area of the porous permeable material is provided. This expansion device is assumed to be used as a dehumidifying valve in an air-conditioning apparatus, and thus, even when a valve seat and the valve body contact with each other so that a flow passage is blocked (fully closed), refrigerant is allowed to pass through the valve body, which is formed of the porous material. Thus, collision sound generated when the two-phase refrigerant collides against the valve body is to be reduced (see, e.g., Patent Literature 1).

An electric valve has also been proposed in which a pipe disposed in a horizontal direction (radial direction) relative to a valve body and a pipe disposed in an axial direction are connected to a main body, and a perforated sheet material is disposed between the main body and the pipe connected to the valve body in the axial direction, to allow refrigerant to pass through the perforated sheet material, thereby reducing refrigerant passing sound caused due to bubbles (see, e.g., Patent Literature 2).

An expansion valve has also been proposed in which a refrigerant straightening tube having a hollow shape with a plurality of holes is disposed at an axial inner wall of a valve chamber and both ends of the refrigerant straightening tube are fixed to a support plate and a main body forming the valve chamber, to allow refrigerant flowing in from a horizontal direction (radial direction) to pass through the refrigerant straightening tube, whereby it is possible to reduce collision sound caused due to collision against a valve body (see, e.g., Patent Literature 3).

Citation List

Patent Literature

Patent Literature 1: Japanese Patent No. 3428516 (Claim 1 and Fig. 2)
Patent Literature 2: Japanese Patent No. 4925638 (Claim 1 and Fig. 1)
Patent Literature 3: Japanese Patent No. 3380395 (Fig. 1)

Summary of Invention

Technical Problem

In the expansion device in Patent Literature 1, even when the flow passage is blocked (fully closed), the refrigerant is allowed to pass through the valve body, which is formed of the porous permeable material. Thus, it is possible to reduce collision sound generated when the two-phase refrigerant collides against the valve body. However, after the collision against the valve body, the refrigerant flows into an expansion portion between the valve seat and the valve chamber in a disturbed state. Thus, the refrigerant sound reducing effect is insufficient.

In addition, in the case where the expansion device is used as an expansion valve, the expansion device needs to be able to completely block the flow passage with the valve body, and needs to be designed in consideration of both flows of the refrigerant passing through the expansion portion and the valve body, and thus it is not possible to use the expansion device as it is.

In the electric valve in Patent Literature 2, when the refrigerant flows from the pipe disposed in the horizontal direction (radial direction) relative to the valve body to the pipe disposed in the axial direction (forward direction flow), it is not possible to reduce collision sound caused by the refrigerant colliding against the valve body and vortex sound and air bubble vibration sound caused by the disturbed refrigerant flow.

In the expansion valve in Patent Literature 3, it is possible to reduce collision sound generated by the refrigerant flowing from the horizontal direction (radial direction) and colliding against the valve body, but an effect of reducing vortex sound and air bubble vibration sound is small because the area of each hole of the refrigerant straightening tube through which the refrigerant passes is small. Document JP 2000 346495 discloses an expansion valve according to the preamble of claim 1.

The present invention has been made to solve the problems as described above, and an object of the present invention is to obtain an expansion valve that is able to produce effectively reduced refrigerant passing sound even when two-phase gas-liquid refrigerant is supplied thereto.

Solution to Problem

An expansion valve according to the present invention includes the features of claim 1.

Advantageous Effects of Invention

In the expansion valve according to the present invention, the part of the valve body that faces the first pipe and surrounds the shaft is composed of the mesh structure member or the member formed of the foaming material, and thus, when refrigerant flows from the first pipe to the second pipe (forward direction flow), the refrigerant contacts the mesh structure member or the member formed of the foaming material, and a flow rate thereof decreases, so that impact sound generated when the refrigerant collides against the valve body is reduced.

The mesh structure member or the member formed of the foaming material has a cylindrical shape of which diameter is larger than the diameter of the shaft of the valve body and smaller than the inner diameter of the valve chamber and is housed in the valve chamber, and thus the refrigerant passage area increases, and an effect of reducing refrigerant sound is also enhanced.

The mesh structure member or the member formed of the foaming material is provided around the shaft of the valve body to be integrated with the valve body, and thus the length (distance) to an expansion portion between the valve body and the valve seat becomes short, and the refrigerant flows into the expansion portion before size-reduced bubbles unite together to increase the sizes thereof. Thus, the effect of reducing the refrigerant sound is also enhanced.

By the refrigerant passing through the mesh structure member or the member formed of the foaming material, it is possible to reduce the bubble diameter, and it is possible to reduce air bubble vibration sound. In addition, it is possible to reduce disturbance of the refrigerant, and it is possible to reduce vortex sound.

When the refrigerant flows from the second pipe to the first pipe (reverse direction flow), the refrigerant that is expanded to accelerate by passing between the valve body and the valve seat is decelerated by passing through the mesh structure member or the member formed of the foaming material, so that it is possible to reduce collision sound at a wall surface of the valve chamber.

Thus, even when two-phase refrigerant in which gas and liquid are mixed flows through the expansion valve, it is possible to reduce collision sound, intermittent sound, air bubble vibration sound, and vortex sound that are generated due to air bubbles, and it is possible to reduce noise of the expansion valve.

Brief Description of Drawings

[Fig. 1] Fig. 1 is a refrigerant circuit diagram of an air-conditioning apparatus according to Embodiment 1 of the present invention.
[Fig. 2] Fig. 2 is a cross-sectional view showing the configuration of an expansion valve according to Embodiment 1 which does not form part of the present invention and a cross-sectional view taken along a line A-A.
[Fig. 3] Fig. 3 is enlarged cross-sectional views of an expansion portion, showing flows of refrigerant through the expansion valve according to Embodiment 1.
[Fig. 4] Fig. 4 is a cross-sectional view showing the configuration of an expansion valve according to Embodiment 2 which forms part of the present invention, a cross-sectional view taken along a line B-B, and a perspective view of a second mesh member.
[Fig. 5] Fig. 5 is enlarged cross-sectional views of an expansion portion, showing flows of refrigerant through the expansion valve according to Embodiment 2 of the present invention.
[Fig. 6] Fig. 6 is a cross-sectional view showing the configuration of an expansion valve according to Embodiment 3 which does not form part of the present invention, a cross-sectional view taken along a line C-C, and a perspective view of a second mesh member.

[Fig. 7] Fig. 7 is enlarged cross-sectional views of an expansion portion, showing flows of refrigerant through the expansion valve according to Embodiment 3.

Description of Embodiments

Embodiment 1

Hereinafter, an expansion valve will be described by means of illustrated Embodiments. The present invention is not limited to Embodiment 2 described below.

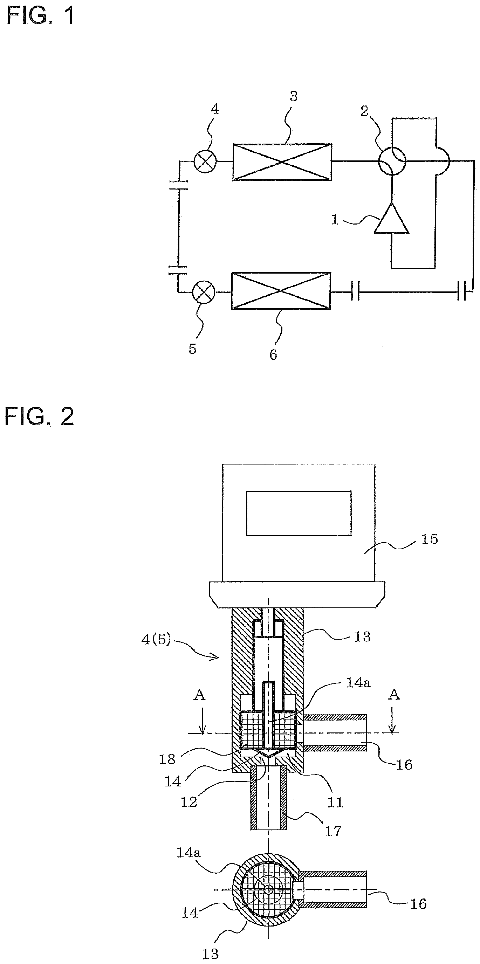

Fig. 1 is a refrigerant circuit diagram of an air-conditioning apparatus according to Embodiment 1. In the air-conditioning apparatus a compressor 1, a four-way valve 2, a condenser 3, a first expansion valve 4, a second expansion valve 5, and an evaporator 6 are connected in series by refrigerant pipes as shown in Fig. 1. For example, in cooling operation, the compressor 1, the four-way valve 2, the condenser 3, and the first expansion valve 4 are housed in one box as an outdoor unit, and the second expansion valve 5 and the evaporator 6 are housed in one box as an indoor unit.

Fig. 2 is a cross-sectional view showing the configuration of the expansion valve according to Embodiment 1, and a cross-sectional view taken along a line A-A. The first expansion valve 4 and the second expansion valve 5 have the same configuration. Thus, the first expansion valve 4 will be described as an example here.

As shown in Fig. 2, the first expansion valve 4 includes a main body 13 having a valve seat 12 in an axial direction of a valve chamber 11; a valve body 14 that is movable in the axial direction of the valve chamber 11 and faces the valve seat 12; a valve driving unit, that is, a coil 15 that moves the valve body 14 back and forth by an electromagnetic force to bring the valve body 14 into contact with the valve seat 12 and separate the valve body 14 from the valve seat 12; a first pipe 16 that is mounted on the main body 13 in a horizontal direction (radial direction); and a second pipe 17 that is mounted on an end of the valve seat 12 and the main body 13 in the axial direction. The first pipe 16 and the second pipe 17 are composed of, for example, copper pipes, and are brazed to the main body 13. The main body 13 is produced by cutting a casting made of brass.

The valve body 14 and the valve seat 12 are brought into contact with each other and separated from each other by the electromagnetic force of the coil 15, so that the cross-sectional area of a flow passage between the valve seat 12 and the valve body 14 communicating with the first pipe 16 and the second pipe 17 changes. The case where the valve body 14 and the valve seat 12 are brought into contact with each other and the valve body 14 is located at the lowermost position so that the flow passage is completely blocked is referred to as fully closing, and the case where the valve body 14 is located at the uppermost portion in the valve chamber 11 so that the width of the flow passage between the valve seat 12 and the valve body 14 becomes maximum is referred to as fully opening.

A part of the valve body 14 facing the first pipe 16 and surrounding a shaft 14a is composed of a mesh structure member (hereinafter, referred to as "mesh member") 18. The mesh member 18 has a cylindrical shape of which diameter is larger than the diameter of the shaft 14a of the valve body 14 and smaller than the inner diameter of the valve chamber 11 and is housed in the valve chamber 11.

The valve body 14 (in particular, an end portion thereof) that contacts the valve seat 12 is composed of a non-mesh member that does not allow refrigerant to pass therethrough.

The mesh structure of the mesh member 18 is formed by, for example, crossing a plurality of copper wires to have a plurality of grids (meshes). When the pressure difference between the front and the back of the expansion valve, a physical property value of a medium, an audible limit frequency 20 kHz, which is in a high frequency band of a general audible range, are substituted into the following formula (1) that represents the frequency f of bubbles, it is possible to calculate an audible limit bubble diameter. When the grid length of each mesh is set to be equal to or less than the audible limit bubble diameter, it is possible to make air bubble vibration sound outside the audible range, so that it is possible to effectively reduce refrigerant sound. Thus, here, the grid length of each mesh of the mesh member 18 is set to be equal to or less than the audible limit bubble diameter.

[Math. 1]

$$f = \frac{1}{2\pi R} \sqrt{\frac{3\gamma P_0}{\rho_w} - \frac{2\sigma}{\rho_w R}} \quad \cdots \cdots \cdots (1)$$

Here, f is the frequency of the bubbles, R is the radius of the bubbles, $\gamma$ is a specific heat ratio, Po is the internal pressure of the bubbles in an equilibrium state, $\rho_w$ is a medium density, and $\sigma$ is a surface tension.

At least the outer shape of the mesh member 18 has a maximum diameter equal to the valve chamber diameter, and the axial length of the mesh member 18 is such a length as to allow a part of the mesh member 18 to be present on a projection plane of a cross section of the first pipe 16 when the valve body 14 is fully opened or fully closed. The mesh member 18 is allowed to be always present on the projection plane of the cross section of the first pipe 16, and thus the refrigerant flowing into the valve chamber 11 passes through the mesh member 18 in a forward direction flow in which the refrigerant flows from the first pipe 16 to the second pipe 17, regardless of an opening degree. Thus, it is possible to effectively reduce collision sound of the valve body 14 and the refrigerant.

Next, operation of the air-conditioning apparatus according to Embodiment 1 will be described. As shown in Fig. 1, a refrigerant circuit according to Embodiment 1 is a two-stage expansion circuit including the first expansion valve 4 and the second expansion valve 5.

In cooling operation, the refrigerant circulates through the compressor 1, the four-way valve 2, the condenser 3, the first expansion valve 4, the second expansion valve 5, and the evaporator 6 in this order. In the compressor 1, the low-pressure gas refrigerant is increased in pressure to become high-temperature and high-pressure gas refrigerant. The gas refrigerant passes through the four-way valve 2 and rejects heat to the ambient air at the condenser 3. Because of the heat rejection to the air, the gas refrigerant condenses to become liquid refrigerant having a decreased temperature. The liquid refrigerant is reduced in pressure at the first expansion valve 4 to become low-pressure two-phase refrigerant. The liquid portion of the two-phase refrigerant further expands by the second expansion valve 5, so that the two-phase refrigerant becomes two-phase refrigerant having an increased quality. At the evaporator 6, the refrigerant receives heat from the air so that the liquid portion thereof evaporates. The gas refrigerant having an increased temperature because of the heat reception from the air flows into the compressor 1 again.

In a general refrigerant circuit, there is one expansion valve disposed on a liquid pipe connected from the condenser 3 to the evaporator 6, and thus the refrigerant in the liquid pipe becomes liquefied in either cooling operation or heating operation, and an amount of the sealed refrigerant increases. On the other hand, by configuring the two-stage expansion circuit, the refrigerant in the liquid pipe is two-phase refrigerant regardless of cooling and heating operation states, and thus it is possible to reduce the amount of the sealed refrigerant. However, the two-phase refrigerant in which gas and liquid are mixed flows into the first expansion valve 4 or the second expansion valve 5, and thus it is necessary to increase the capacity of the expansion valve. In addition, as compared to the case where only liquid phase flows in, noise increases due to bubble vibration, which may be a problem. By applying the expansion valve (Fig. 2) according to Embodiment 1 to each of the first expansion valve 4 and the second expansion valve 5, it is possible to reduce the noise.

Refrigerant sound can be roughly classified into sound sources such as air bubble vibration sound, collision sound, vortex sound, and jet sound. A main object of the expansion valve according to Embodiment 1 is to reduce influence of these sound sources to reduce the refrigerant sound.

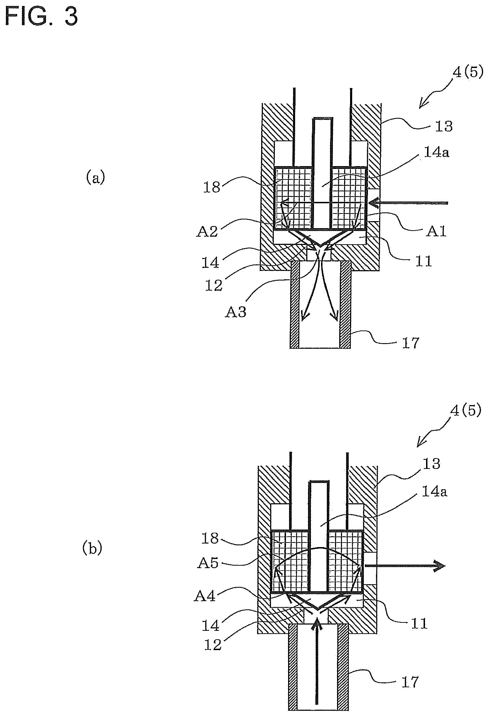

Fig. 3 is enlarged cross-sectional views of an expansion portion, showing flows of the refrigerant through the expansion valve according to Embodiment 1 of the present invention, wherein (a) shows the forward direction flow and (b) shows a reverse direction flow. In the drawings, reference sings A1 to A5 each indicate a location where an effect of reducing the sound source is obtained, and correspond to the following descriptions of (A1) to (A5) sections. Here, a flow of the refrigerant from the first pipe 16 (Fig. 2) to the second pipe 17 is referred to as the forward direction flow, and a flow of the refrigerant from the second pipe 17 to the first pipe 16 is referred to as the reverse direction flow.

(Forward Direction Flow)

In the forward direction flow as shown in Fig. 3 (a), the valve body 14 has an intermediate opening degree between fully opening and fully closing, and the refrigerant flows from the first pipe 16 (Fig. 2) to the second pipe 17.

(A1) In the expansion valve, for example, the first expansion valve 4, the mesh member 18 is present on a part of the projection plane of the first pipe 16, and thus the fluid initially contacts the mesh member 18, the flow rate thereof decreases, and the fluid collides against the valve body 14. Thus, it is possible to reduce impact sound generated when the refrigerant collides against the valve body 14.

(A2) In the mesh member 18, the grid length of each mesh is set to be equal to or less than the audible limit bubble diameter. Thus, by causing the refrigerant to pass from the radial direction to the axial direction of the valve body, the bubble diameter is reduced, generated air bubble vibration sound is shifted to the outside of the audible range, and refrigerant sound in the audible range is reduced.

The mesh member 18 causes the refrigerant to pass therethrough, thereby making gas and liquid uniform to reduce vortex sound. The outer diameter of the mesh member 18 having a cylindrical shape is made substantially equal to the inner diameter of the valve chamber 11, thus the fluid passage area can be increased, and the effect of reducing the refrigerant sound and vortex sound is further enhanced.

The axial length of the mesh member 18 is such a length as to allow the mesh member 18 to be always present on the projection plane of the cross section of the first pipe 16 when the valve body 14 is fully opened or fully closed, and thus a distance for which the fluid passes through the mesh member 18 is long, and the effect of reducing the vortex sound is enhanced.

(A3) Although the magnitude of the refrigerant sound is not directly influenced, the refrigerant having gas and liquid uniformed by the mesh member 18 flows between the non-mesh member and the valve body 14, whereby it is possible to reduce intermittent sound caused due to gas and liquid alternately flowing. If a flow straightening section (flow passage) is long, bubbles repeatedly unite and grow into large bubbles. However, the mesh member 18 is provided around the shaft 14a of the valve body 14 and integrated with the valve body 14 as in the expansion valve according to Embodiment 1, and thus the distance to the expansion portion between the valve body 14 and the valve seat 12 becomes short, so that it is possible to cause the refrigerant to flow into the expansion portion before the size-reduced bubbles unite together to increase the sizes thereof. Thus, it is possible to enhance the effect of reducing the intermittent sound caused due to gas and liquid alternately flowing.

The valve body 14, which is a non-mesh member, does not allow the refrigerant to pass therethrough, and thus the refrigerant does not flow from the first pipe 16 via the mesh member 18 directly to the second pipe 17. Thus, flow rate adjustment is easy.

(Reverse Direction Flow)

In the reverse direction flow as shown in Fig. 3 (b), the valve body 14 has an intermediate opening degree between fully opening and fully closing, and the refrigerant flows from the second pipe 17 to the first pipe 16 (Fig. 2).

(A4) The refrigerant that is expanded to accelerate by passing between the valve seat 12 and the valve body 14, which is a non-mesh member, is decelerated by passing through the mesh member 18. Thus, it is possible to reduce collision sound at a wall surface of the valve chamber 11.

(A5) The mesh member 18 causes the refrigerant to pass therethrough from the axial direction of the valve body 14 to the radial direction, thereby reducing the bubble diameter to shift generated air bubble vibration sound to the outside of the audible range. Thus, it is possible to reduce refrigerant sound within the audible range. The outer diameter of the mesh member 18 is made substantially equal to the inner diameter of the valve chamber 11, and thus the fluid passage area can be increased, and the effect of reducing the refrigerant sound and vortex sound is further enhanced. The axial length of the mesh member 18 is such a length as to allow the mesh member 18 to be always present on the projection plane of the cross section of the first pipe 16 when the valve body 14 is fully opened or fully closed, and thus a distance for which the fluid passes through the mesh member 18 is long, and the effect of reducing the vortex sound is enhanced.

Thus, with the expansion valve according to Embodiment 1, even when the two-phase refrigerant flows, it is possible to reduce air bubble vibration sound, collision sound, vortex sound, and flow dividing sound that are sound sources of the refrigerant sound, and it is possible to reduce noise of the expansion valve.

Meanwhile, among a high-density material and a low-density material that have the same shape, the natural frequency of the low-density material is higher. Thus, when natural vibration is excited by fluid pressure fluctuation or another factor, high-frequency sound is generated. In the case where high-frequency sound is to be reduced, the non-mesh member and the valve body may be formed of a high-density material. The same applies to other Embodiments described below.

Embodiment 2

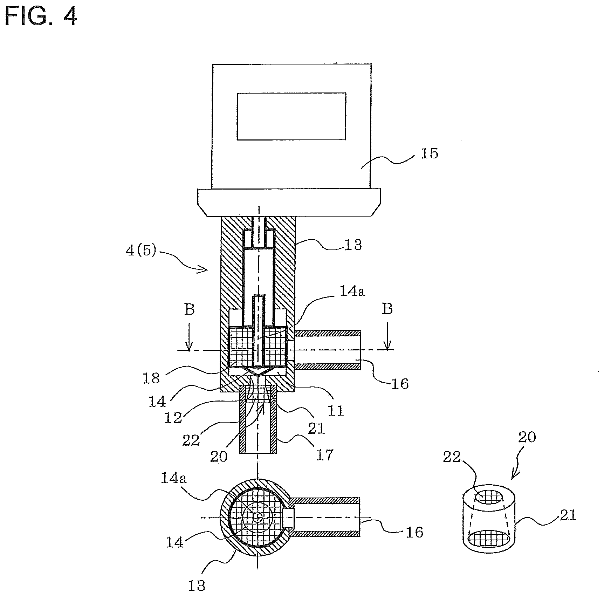

Fig. 4 is a cross-sectional view showing the configuration of an expansion valve according to Embodiment 2 of the present invention, a cross-sectional view taken along a line B-B, and a perspective view of a second mesh member. In the drawings, the same functional portions as those in Embodiment 1 described above are designated by the same reference signs.

In the expansion valve according to Embodiment 2 of the present invention, a second mesh structure member (hereinafter, referred to as a second mesh member) 20 is provided in the second pipe 17 at an end portion closer to the main body 13 as shown in Fig. 4.

The second mesh member 20 includes a cylindrical non-mesh structure member 21 and a truncated cone-shaped mesh member 22 in the cylindrical non-mesh structure member 21, and is configured so that fluid is allowed to pass through the truncated cone-shaped mesh member 22 and so that a diameter-reduced upper surface of the truncated cone-shaped mesh member 22 faces toward the valve seat.

Similarly to the tubular mesh member 18 of Embodiment 1 described above, the grid length of each mesh of the truncated cone-shaped mesh member 22 is set to be equal to or less than the audible limit bubble diameter.

The axial length of the second mesh member 20 is set to, for example, a length equivalent to a distance from the valve seat 12 to a position where the expanded refrigerant collides against a wall surface of the second pipe 17 in a state where the speed of the fluid is at a maximum. Thus, it is possible to effectively reduce the refrigerant sound.

The truncated cone-shaped mesh member 22 of the second mesh member 20 is configured so that the diameter of the upper surface of the truncated cone is equal to the orifice diameter of the valve seat 12 and the diameter of the lower surface of the truncated cone is equal to the inner diameter of the second pipe 17. Thus, it is possible to effectively reduce the refrigerant sound.

An outer periphery of the second mesh member 20 is composed of the cylindrical non-mesh structure member 21. Thus, it is easy to remove the second mesh member 20 from the inside of the second pipe 17.

As described above, the refrigerant sound can be roughly classified into sound sources such as air bubble vibration sound, collision sound, vortex sound, and jet sound. A main object of the expansion valve according to Embodiment 2 is also to reduce influence of these sound sources to reduce the refrigerant sound.

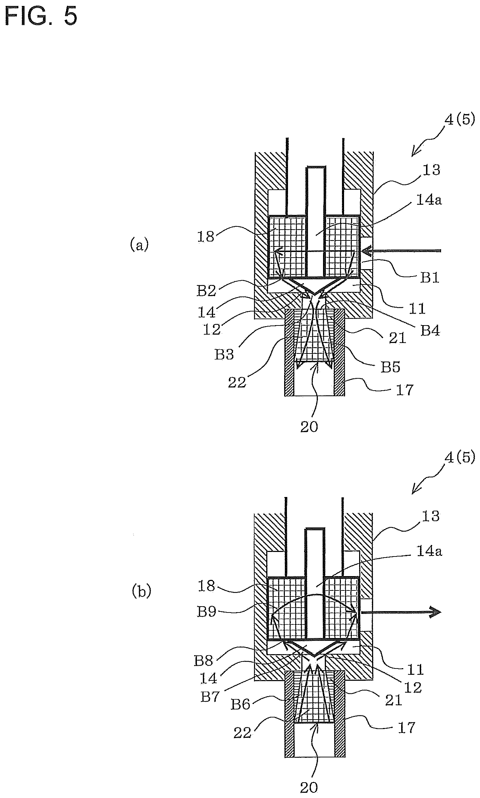

Fig. 5 is enlarged cross-sectional views of an expansion portion, showing flows of the refrigerant through the expansion valve according to Embodiment 2 of the present invention, wherein (a) shows a forward direction flow and (b) shows a reverse direction flow. In the drawings, reference sings B1 to B9 each indicate a location where an effect of reducing the sound source is obtained, and correspond to the following descriptions of (B1) to (B9) sections. Here, a flow of the refrigerant from the first pipe 16 (Fig. 4) to the second pipe 17 is referred to as the forward direction flow, and a flow of the refrigerant from the second pipe 17 to the first pipe 16 is referred to as the reverse direction flow.

(Forward Direction Flow)

In the forward direction flow as shown in Fig. 5 (a), the valve body 14 has an intermediate opening degree between fully opening and fully closing, and the refrigerant flows from the first pipe 16 (Fig. 4) to the second pipe 17. The flows of the refrigerant at the locations B1 to B3 are the same as the flows of the refrigerant at the locations A1 to A3 described above in Embodiment 1, the description of the (A1) to (A3) sections can be applied thereto, and thus the description thereof is omitted.

(B4) The refrigerant that is expanded to accelerate by the valve body 14, which is a non-mesh member, is decelerated by the truncated cone-shaped mesh member 22 when the refrigerant passes through the second mesh member 20. Thus, it is possible to reduce collision sound at the wall surface of the second pipe 17.

(B5) The truncated cone-shaped mesh member 22 of the second mesh member 20 causes the refrigerant to pass therethrough, thereby reducing the bubble diameter to shift generated air bubble vibration sound to the outside of the audible range. Thus, it is possible to reduce the refrigerant sound in the audible range.

The truncated cone-shaped mesh member 22 causes the refrigerant to pass therethrough, thereby making gas and liquid uniform to reduce vortex sound. The refrigerant that is expanded to accelerate by the valve body 14 spreads out in the second pipe 17 in a cone shape. However, as shown in Fig. 5, when an orifice is formed between the second pipe 17 and the valve seat 12, backflow to an expansion side occurs, and a dead water region occurs. In the dead water region, swirl is formed, and thus the flow of the refrigerant is disturbed to generate vortex sound.

In the expansion valve according to Embodiment 2, the second mesh member 20 includes the cylindrical non-mesh structure member 21 and the truncated cone-shaped mesh member 22 in the cylindrical non-mesh structure member 21, and thus the flow of the refrigerant becomes smooth, occurrence of a dead water region is controlled, it is possible to reduce disturbed flow of the refrigerant, and it is possible to further reduce vortex sound.

The axial length of the second mesh member 20 is set to a length equivalent to a distance from the valve seat 12 to the position where the expanded refrigerant collides against a wall surface of the second pipe 17 in a state where the speed of the fluid is at a maximum, and thus the refrigerant passes through the second mesh member 20 even at a maximum flow rate. Thus, it is possible to reduce the refrigerant sound.

(Reverse Direction Flow)

In the reverse direction flow as shown in Fig. 5 (b), the valve body 14 has an intermediate opening degree between fully opening and fully closing, and the refrigerant flows from the second pipe 17 to the first pipe 16. The flows of the refrigerant at the locations B8 and B9 are the same as the flows of the refrigerant at the locations A4 and A5 described above in Embodiment 1, the description of the (A4) and (A5) sections can be applied thereto, and thus the description thereof is omitted.

(B6) The second mesh member 20 disposed in the valve body axial direction causes the refrigerant to pass therethrough, thereby reducing the bubble diameter to shift air bubble vibration sound to the outside of the audible range. Thus, it is possible to reduce the refrigerant sound in the audible range.

In addition, the second mesh member 20 causes the refrigerant to pass therethrough, thereby making gas and liquid uniform to reduce vortex sound. The refrigerant is gently reduced in pressure by passing through the second mesh member 20, and even when bubbles occur with the pressure reduction, the refrigerant immediately passes through the cylindrical mesh member 18 in the valve chamber 11. Thus, it is possible to enhance the effect of reducing the refrigerant sound.

(B7) Although the magnitude of the refrigerant sound is not directly influenced, the refrigerant having gas and liquid uniformed by passing through the second mesh member 20 flows between the non-mesh member and the valve body 14, whereby it is possible to reduce intermittent sound caused due to gas and liquid alternately flowing. As described above, if a flow straightening section is long, bubbles repeatedly unite and grow into large bubbles. However, in the expansion valve according to Embodiment 2, the distance from the second mesh member 20 to the expansion portion between the valve body 14 and the valve seat 12 is short, so that it is possible to cause the refrigerant to flow into the expansion portion before the bubbles grow large. Thus, it is possible to enhance the effect of reducing the intermittent sound caused due to gas and liquid alternately flowing.

Thus, also with the expansion valve according to Embodiment 2 of the present invention, when the two-phase refrigerant flows, it is possible to reduce air bubble vibration sound, collision sound, vortex sound, and flow dividing sound that are sound sources of the refrigerant sound, and it is possible to reduce noise of the expansion valve.

Embodiment 3

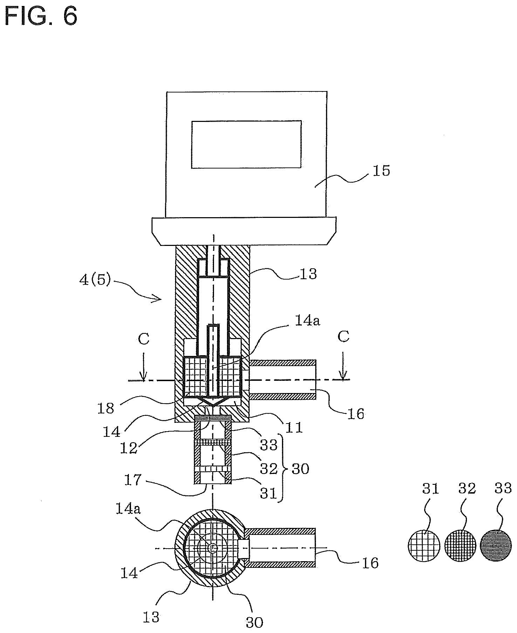

Fig. 6 is a cross-sectional view showing the configuration of an expansion valve according to Embodiment 3, a cross-sectional view taken along a line C-C, and a plan view of a second mesh member. In the drawings, the same functional portions as those in Embodiment 1 described above are designated by the same reference signs.

In the expansion valve according to Embodiment 3, as shown in Fig. 6, a second mesh structure member (hereinafter, referred to as a second mesh member) 30 is composed of a plurality of different mesh members 31, 32, and 33 that are arranged at intervals in the axial direction and have different grid lengths.

The plurality of different mesh members 31, 32, and 33, of the second mesh member 30, having different grid lengths are arranged so that the grid lengths of the meshes thereof are shorter as a distance to the main body 13 decreases. For example, the minimum grid length is set to be equal to or less than the above-described audible limit bubble diameter. By setting the minimum grid length to be equal to or less than the audible limit bubble diameter, it is possible to effectively reduce air bubble vibration sound.

As described above, the refrigerant sound can be roughly classified into sound sources such as air bubble vibration sound, collision sound, vortex sound, and jet sound. A main object of the expansion valve according to Embodiment 3 is also to reduce influence of these sound sources to reduce the refrigerant sound.

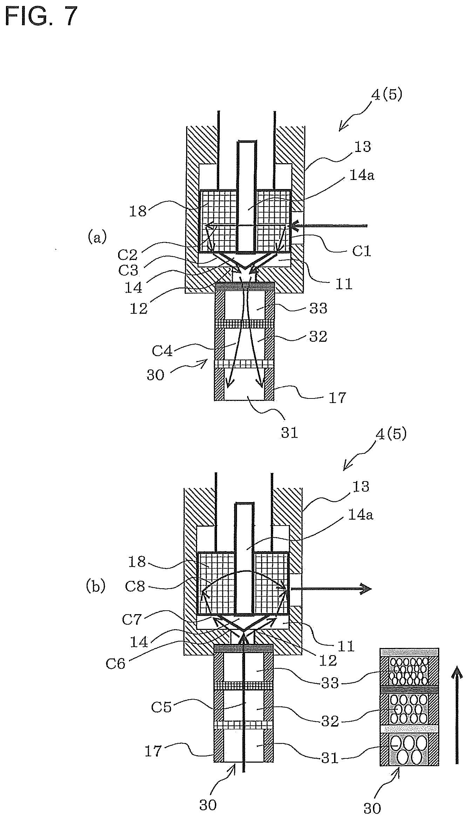

Fig. 7 is enlarged cross-sectional views of an expansion portion, showing flows of the refrigerant through the expansion valve according to Embodiment 3 of the present invention, wherein (a) shows a forward direction flow and (b) shows a reverse direction flow. In the drawings, reference sings C1 to C8 each indicate a location where an effect of reducing the sound source is obtained, and correspond to the following descriptions of (C1) to (C8) sections. Also here, a flow of the refrigerant from the first pipe 16 (Fig. 6) to the second pipe 17 is referred to as the forward direction flow, and a flow of the refrigerant from the second pipe 17 to the first pipe 16 is referred to as the reverse direction flow.

(Forward Direction Flow)

In the forward direction flow as shown in Fig. 7 (a), the valve body 14 has an intermediate opening degree between fully opening and fully closing, and the refrigerant flows from the first pipe 16 (Fig. 6) to the second pipe 17. The flows of the refrigerant at the locations C1 to C3 are the same as the flows of the refrigerant at the locations A1 to A3 described above in Embodiment 1, the description of the (A1) to (A3) sections can be applied thereto, and thus the description thereof is omitted.

(C4) The refrigerant that is expanded to accelerate by the valve body 14, which is a non-mesh member, is decelerated by passing through a plurality of the second mesh members 30. Thus, it is possible to reduce collision sound at the wall surface of the second pipe 17. The second mesh member 30, in particular, the mesh member 33 having the minimum grid length causes the refrigerant to pass therethrough, thereby reducing the bubble diameter to shift generated air bubble vibration sound to the outside of the audible range. Thus, it is possible to reduce the refrigerant sound in the audible range. In addition, by causing the refrigerant to pass through each second mesh member 30, it is possible to make gas and liquid uniform to reduce vortex sound.

(Reverse Direction Flow)

In the reverse direction flow, the valve body 14 has an intermediate opening degree between fully opening and fully closing, and the refrigerant flows from the second pipe 17 to the first pipe 16 (Fig. 6). The flows of the refrigerant at the locations C7 and C8 are the same as the flows of the refrigerant at the locations A4 and A5 described above in Embodiment 1, the description of the (A4) and (A5) sections can be applied thereto, and thus the description thereof is omitted.

(C5) The plurality of different mesh members 31, 32, and 33 arranged at intervals in the valve body axial direction cause the refrigerant to pass therethrough, thereby reducing the bubble diameter to shift air bubble vibration sound to the outside of the audible range. Thus, it is possible to reduce the refrigerant sound in the audible range.

In addition, the plurality of different mesh members 31, 32, and 33 cause the refrigerant to pass therethrough, thereby making gas and liquid uniform to reduce vortex sound. Each time the refrigerant passes through the plurality of different mesh members 31, 32, and 33, the bubble diameter is gradually reduced. Thus, it is possible to further reduce disturbed flow of the refrigerant, and it is possible to reduce vortex sound.

(C6) Although the magnitude of the refrigerant sound is not directly influenced, the refrigerant having gas and liquid uniformed by passing through the plurality of different mesh members 31, 32, and 33 flows between the non-mesh member and the valve body 14, whereby it is possible to reduce intermittent sound caused due to gas and liquid alternately flowing. As described above, if a flow straightening section is long, bubbles repeatedly unite and grow into large bubbles. However, the distance from the mesh member 33 having the minimum grid length to the expansion portion between the valve body 14 and the valve seat 12 is short, so that it is possible to cause the refrigerant to flow into the expansion portion before the bubbles grow large. Thus, it is possible to enhance the effect of reducing the intermittent sound caused due to gas and liquid alternately flowing.

Thus, also with the expansion valve according to Embodiment 3, when the two-phase refrigerant flows, it is possible to reduce air bubble vibration sound, collision sound, vortex sound, and flow dividing sound that are sound sources of the refrigerant sound, and it is possible to reduce noise of the expansion valve.

In each Embodiment described above, the part of the valve body 14 that faces the first pipe 16 and surrounds the shaft 14a is composed of the mesh member 18. However, the valve body 14 is not limited thereto, and for example, a member formed of a foaming material may be integrally provided around the shaft 14a of the valve body 14. In this case as well, the effect of reducing refrigerant passing sound is obtained.

Reference Signs List

1 compressor, 2 four-way valve, 3 condenser, 4 first expansion valve, 5 second expansion valve, 6 evaporator, 11 valve chamber, 12 valve seat, 13 main body, 14 valve body, 14a shaft, 15 coil (valve driving unit), 16 first pipe, 17 second pipe, 18 mesh member (mesh structure member), A1 to A5, B1 to B9, C1 to C8 location where effect of reducing sound source is obtained, 20, 30 second mesh member (second mesh structure member), 21 cylindrical non-mesh structure member, 22 truncated cone-shaped mesh member, 31, 32, 33 plurality of different mesh members

**Claims**

1. An expansion valve comprising:

   a main body (13) having a valve seat (12) in an axial direction of a valve chamber (11);
   a valve body (14) movable in the axial direction of the valve chamber (11) and facing the valve seat (12);
   a valve driving unit (15) configured to bring the valve body (14) into contact with the valve seat (12) and separate the valve body (14) from the valve seat (12);
   a first pipe (16) connected to the valve chamber (11) of the main body (13) from a radial direction; and
   a second pipe (17) mounted to the valve chamber (11) of the main body (13) from the axial direction,
   at least a part of the valve body (14) facing the first pipe (16) and surrounding a shaft (14a) being composed of a first mesh structure member (18) or a first member formed of a foaming material, **characterising by**
   the first mesh structure member (18) or the first member formed of the foaming material in the valve body (14) having a cylindrical shape of which diameter is larger than a diameter of the shaft (14a) of the valve body (14) and smaller than an inner diameter of the valve chamber (11), and being housed in the valve chamber (11),
   wherein a second mesh structure member (20) is provided in the second pipe (17) at an end portion closer to the main body (13),
   at the end portion of the second pipe (17) closer to the main body (13), the second mesh structure member (20) including a cylindrical non-mesh structure member (21) and a truncated cone-shaped mesh member (22) in the cylindrical non-mesh structure member (21), and being configured so that fluid is allowed to pass through the truncated cone-shaped mesh member (22) and so that a diameter-reduced upper surface of the truncated cone-shaped mesh member (22) faces toward the valve seat (12).

2. The expansion valve of claim 1, wherein an axial length of the first mesh structure member (18) or the member formed of the foaming material is set so that a part of the first mesh structure member (18) or the member formed of the foaming material is present on a projection plane of a cross section of the first pipe (16) when the valve body (14) is fully opened or fully closed.

3. The expansion valve of any one of claims 1 to 2, wherein an axial length of the second mesh structure member (20) at the end portion of the second pipe (17) closer to the main body (13) is set to a length equivalent to a distance from the valve seat (12) to a position where expanded refrigerant collides against a wall surface of the second pipe (17) in a state where a speed of fluid is at a maximum.

**Patentansprüche**

1.  Expansionsventil, umfassend:

    einen Hauptkörper (13), aufweisend einen Ventilsitz (12) in einer axialen Richtung einer Ventilkammer (11);
    einen Ventilkörper (14), der in der axialen Richtung der Ventilkammer (11) beweglich ist und dem Ventilsitz (12) zugewandt ist;
    eine Ventilantriebseinheit (15), die eingerichtet ist, den Ventilkörper (14) mit dem Ventilsitz (12) in Kontakt zu bringen und den Ventilkörper (14) von dem Ventilsitz (12) zu trennen;
    eine erste Leitung (16), die mit der Ventilkammer (11) des Hauptkörpers (13) ausgehend von einer radialen Richtung verbunden ist; und
    eine zweite Leitung (17), die an der Ventilkammer (11) des Hauptkörpers (13) ausgehend von der axialen Richtung angebracht ist,
    wobei zumindest ein Teil des Ventilkörpers (14), der der ersten Leitung (16) zugewandt ist und einen Schaft (14a) umgibt, aus einem ersten Gitterstrukturelement (18) oder einem aus einem Schaummaterial gebildeten ersten Element gebildet ist, **dadurch gekennzeichnet, dass**
    das erste Gitterstrukturelement (18) oder das aus dem Schaummaterial gebildete erste Element in dem Ventilkörper (14) eine zylindrische Form aufweist, deren Durchmesser größer ist als ein Durchmesser des Schafts (14a) des Ventilkörpers (14) und kleiner ist als ein Innendurchmesser der Ventilkammer (11), und in der Ventilkammer (11) untergebracht ist,
    wobei ein zweites Gitterstrukturelement (20) in der zweiten Leitung (17) an einem Endabschnitt vorgesehen ist, der näher zu dem Hauptkörper (13) liegt,
    wobei an dem Endabschnitt der zweiten Leitung (17), der näher zu dem Hauptkörper (13) liegt, das zweite Gitterstrukturelement (20) ein zylindrisches, Nicht-Gitterstrukturelement (21) und ein kegelstumpfförmiges Gitterelement (22) in dem zylindrischen, Nicht-Gitterstrukturelement (21) aufweist und eingerichtet ist, so dass Fluid das kegelstumpfförmige Gitterelement (22) passieren kann und so dass eine im Durchmesser reduzierte obere Oberfläche des kegelstumpfförmigen Gitterelements (22) dem Ventilsitz (12) zugewandt ist.

2.  Expansionsventil nach Anspruch 1, wobei eine axiale Länge des ersten Gitterstrukturelements (18) oder des aus dem Schaummaterial gebildeten Elements eingestellt ist, so dass ein Teil des ersten Gitterstrukturelements (18) oder des aus dem Schaummaterial gebildeten Elements auf einer Projektionsebene eines Querschnitts der ersten Leitung (16) vorhanden ist, wenn der Ventilkörper (14) vollständig geöffnet oder vollständig geschlossen ist.

3.  Expansionsventil nach einem der Ansprüche 1 bis 2, wobei eine axiale Länge des zweiten Gitterstrukturelements (20) an dem Endabschnitt der zweiten Leitung (17), der näher zu dem Hauptkörper (13) liegt, auf eine Länge eingestellt ist, die äquivalent ist zu einem Abstand von dem Ventilsitz (12) zu einer Position, wo expandiertes Kältemittel mit einer Wandoberfläche der zweiten Leitung (17) in einem Zustand kollidiert, in dem eine Geschwindigkeit des Fluids maximal ist.

**Revendications**

1.  Soupape de détente comprenant :

    un corps principal (13) ayant un siège de soupape (12) dans une direction axiale d'une chambre de soupape (11) ;
    un corps de soupape (14) mobile dans la direction axiale de la chambre de soupape (11) et tourné vers le siège de soupape (12) ;
    une unité d'entraînement de soupape (15) configurée pour amener le corps de soupape (14) en contact avec le siège de soupape (12) et pour séparer le corps de soupape (14) du siège de soupape (12) ;
    un premier conduit (16) relié à la chambre de soupape (11) du corps principal (13) dans une direction radiale ; et
    un second conduit (17) monté sur la chambre de soupape (11) du corps principal (13) dans la direction axiale,
    au moins une partie du corps de soupape (14) tournée vers le premier conduit (16) et entourant un arbre (14a) étant composée d'un premier élément à structure en maillage (18) ou d'un premier élément formé d'un matériau mousseux, **caractérisée en ce que**

le premier élément à structure en maillage (18) ou le premier élément formé du matériau mousseux dans le corps de soupape (14) possède une forme cylindrique dont le diamètre est supérieur à un diamètre de l'arbre (14a) du corps de soupape (14) et inférieur à un diamètre interne de la chambre de soupape (11), et est contenu dans la chambre de soupape (11),

dans laquelle un second élément à structure en maillage (20) est prévu dans le second conduit (17) au niveau d'une partie d'extrémité plus proche du corps principal (13),

au niveau de la partie d'extrémité du second conduit (17) plus proche du corps principal (13), le second élément à structure en maillage (20) comprend un élément à structure non maillée cylindrique (21) et un élément à maillage en forme de cône tronqué (22) dans l'élément à structure non maillée cylindrique (21), et est configuré de sorte qu'un fluide puisse passer à travers l'élément à maillage en forme de cône tronqué (22) et de sorte qu'une surface supérieure à diamètre réduit de l'élément à maillage en forme de cône tronqué (22) soit tournée vers le siège de soupape (12).

2.  Soupape de détente selon la revendication 1, dans laquelle une longueur axiale du premier élément à structure en maillage (18) ou de l'élément formé du matériau mousseux est définie de sorte qu'une partie du premier élément à structure en maillage (18) ou de l'élément formé du matériau mousseux soit présente sur un plan de projection d'une section transversale du premier conduit (16) lorsque le corps de soupape (14) est entièrement ouvert ou entièrement fermé.

3.  Soupape de détente selon l'une quelconque des revendications 1 à 2, dans laquelle une longueur axiale du second élément à structure en maillage (20) au niveau de la partie d'extrémité du second conduit (17) plus proche du corps principal (13) est définie comme une longueur équivalente à une distance entre le siège de soupape (12) et un emplacement auquel un réfrigérant dilaté heurte une surface de paroi du second conduit (17) dans un état dans lequel une vitesse du fluide est maximale.

FIG. 1

FIG. 2

# FIG. 3

(a)

4(5)

13

14a

18

A2

A1

14

11

12

A3

17

(b)

4(5)

13

14a

18

A5

A4

14

12

11

17

FIG. 4

FIG. 5

(a)

(b)

# FIG. 6

# FIG. 7

**EP 3 064 868 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3428516 B
- JP 4925638 B
- JP 3380395 B
- JP 2000346495 A